# EUROPÄISCHE PATENTSCHRIFT

(11) **EP 2 472 219 B1**
(45) Veröffentlichungstag und Bekanntmachung des Hinweises auf die Patenterteilung: **19.03.2014**
(21) Anmeldenummer: 11150065.8
(22) Anmeldetag: 04.01.2011
(51) Int. Cl.: G01B 11/08, G01N 21/90, G01N 21/25, G01N 35/00, B01L 3/00

(54) **Verfahren zur Ermittlung eines Formkorrekturwertes F für Labor-Flüssigkeitsanalyse-Küvetten**
Method for determining a shape adjustment value F for laboratory fluid analysis vessels
Procédé de détermination d'une valeur de correction de forme F pour éprouvettes d'analyse de liquide en laboratoire

(43) Veröffentlichungstag der Anmeldung: 04.07.2012
(73) Patentinhaber: Hach Lange GmbH, 14163 Berlin (DE)
(72) Erfinder: Frank, Stefan, 14055, Berlin (DE)
(74) Vertreter: ter Smitten, Hans

(56) Entgegenhaltungen:
- DE-A1- 3 921 393
- DE-A1- 4 109 118
- JP-A- 55 069 027
- JP-A- 60 231 171
- US-A- 4 953 975
- US-A1- 2004 086 173
- US-B1- 6 980 285

## Beschreibung

Die Erfindung bezieht sich auf ein Verfahren zur Ermittlung eines Formkorrekturwertes F für Labor-Flüssigkeitsanalyse-Küvetten für fotometrische Labor-Analysegeräte.

Im Bereich der Laboranalyse haben sich unter anderem sogenannte Küvettentests etabliert, die aus mit einem Reagenz gefüllten Küvetten bestehen, die nach dem Einfüllen der Flüssigkeitsprobe zur quantitativen Analyse in ein Labor-Analysegerät eingesetzt werden. Das herstellerseitig bereits in die Küvette eingefüllte Reagenz reagiert mit dem quantitativ zu bestimmenden Analyt der Wasser- bzw. Abwasser-Probe farbverändernd. Diese Farbveränderung wird in dem Labor-Analysegerät quantitativ mit Hilfe seines Fotometers bestimmt. Hierzu wird die Küvette in radialer Richtung fotometriert, wie dies in DE 41 09 118 A1 offenbart ist.

Aus JP 55069027 A ist ein Laboranalysegerät bekannt, bei dem in die Küvetten zunächst ein Extinktionstest-Mittel eingegeben wird, mit dem eine Kalibrierungsmessung durchgeführt wird. Anschließend wird das Mittel entfernt, die Probe in die Küvette gegeben und zur Ermittlung der Proben-Extinktion photometriert. Mit Hilfe der mit dem Extinktionstest-Mittel ermittelten Extinktion kann der Extinktions-Wert der Probe entsprechend korrigiert werden.

Aus JP 60231171 ist ein Laboranalysegerät bekannt, bei dem die optische Weglänge eines Reaktionscontainers durch Messung der Extinktion gemessen wird, wenn der Reaktionscontainer in einen Wassertank eingetaucht ist.

Aus US 6,980,285 B1 ist ein Photometer bekannt, bei dem ein Korrekturwert für die Photometrie ermittelt wird, indem die Werte mit einer Kalibrierflüssigkeit bekannter Absorption gefüllt und die Absorption bzw. Extinktion ermittelt wird.

Aufgabe der Erfindung ist es, die Genauigkeit der Messergebnisse der Küvettentests auf einfache Weise zu verbessern.

Diese Aufgabe wird erfindungsgemäß gelöst mit einem Verfahren mit den Merkmalen des Patentanspruches 1.

Das erfindungsgemäße Verfahren zur Ermittlung eines Formkorrekturwertes F für Labor-Flüssigkeitsanalyse-Küvetten mit einem im Querschnitt kreisrunden Küvettenkörper sieht zunächst das exakte optische Messen bzw. Vermessen des Innen- oder Außen-Durchmessers des Küvettenkörpers vor. Aus dem gemessenen Innen- bzw. Außen-Durchmesser des Küvettenkörpers wird ein Formkorrekturwert F ermittelt, der an bzw. auf dem Küvettenkörper jeder Küvette hinterlegt wird.

Bei der Herstellung der Küvetten treten Schwankungen des Durchmessers der Küvettenkörper im einsteigen Prozentbereich auf. Zwar können im Durchmesser stark vom Sollwert abweichende Küvetten aussortiert werden. Für eine wirtschaftliche Küvetten- Herstellung muss jedoch eine Schwankung des Durchmessers von 1 bis 2 % in Kauf genommen werden. Hierdurch variiert auch die Länge der in radialer Richtung durch die Küvette verlaufenden fotometrischen Messstrecke innerhalb der Küvette um 1 bis 2 %, was auch die Kennlinie der Analyt-Konzentration zu der gemessenen Extinktion entsprechend beeinflusst, die durch ein Fotometer des Labor-Analysegerätes transmissiv bestimmt wird.

Durch die exakte Ermittlung des individuellen Durchmessers jeder Küvette kann die Länge der Messstrecke innerhalb der Küvette exakt bestimmt werden. Zwar wird hierzu bevorzugt der Innen-Durchmesser des Küvettenkörpers gemessen, jedoch kann, eine relativ konstante Wandstärke des Küvettenkörpers unterstellend, auch aus dem Außen-Durchmesser des Küvettenkörpers exakt auf die Länge der Messstrecke innerhalb des Küvettenkörpers geschlossen werden. Der Formkorrekturfaktor F stellt also für das Analysegerät einen Wert zur Verfügung, der mit der exakten Länge der Messstrecke innerhalb der konkreten Küvette korreliert. In dem Analysegerät wird der Korrekturfaktor F aus bzw. von der Küvette ausgelesen.

Mit Hilfe des Korrekturfaktors F kann dann die von dem Fotometer gemessene Extinktion entsprechend korrigiert werden. Wie Versuche ergeben haben, wird hierdurch die Genauigkeit der quantitativen Bestimmung des Analyts in der Flüssigkeitsprobe um ungefähr das Fünffache erhöht, d.h. der Fehler reduziert sich auf 20% des Fehlers ohne Korrektur mit einem Formkorrekturwert B. Ferner kann auf diese Weise der Ausschuss bei der Küvetten-Produktion verringert werden, da die Anforderungen an die Maßhaltigkeit der hergestellten Küvetten verringert werden kann. Hierdurch werden die durchschnittlichen Herstellungskosten für die Küvetten verringert.

Vorzugsweise wird der Formkorrekturwert F in einem zweidimensionalen Barcode hinterlegt, der von außen sichtbar auf dem Küvettenkörper- fixiert ist. Ein auf der Küvette fixierter Barcode ist ein relativ einfaches und preiswertes Mittel, der Küvette unmittelbar, zuordnungsfehlerfrei und unverlierbar den Formkorrekturwert F zuzuordnen. Der Barcode kann beispielsweise von einem entsprechenden ein- oder zweidimensionalen digitalen Barcodeleser des Analysegerätes ausgelesen werden. Der Barcodeleser kann beispielsweise in dem Küvettenschacht des Analysegerätes angeordnet sein, in den die Küvette für die Fotometrierung eingesetzt wird.

Gemäß einer bevorzugten Ausgestaltung wird der Durchmesser des Küvettenkörpers über den gesamten Küvetten-Umfang mehrfach gemessen. Der Formkorrekturwert F wird aus allen Durchmesser-Werten ermittelt, beispielsweise aus dem arithmetischen Mittel der DurchmesserWerte. Auf diese Weise wird ein mittlerer Formkorrekturwert F ermittelt. Die Küvettenkörper sind zylindrisch, also im Querschnitt kreisrund ausgebildet. Eine eindeutige rotatorische Position der Küvette in dem Analysegerät kann also nicht sichergestellt werden. Ferner werden Analysegeräte eingesetzt, die eine Küvetten-Drehvorrichtung aufweisen, die bei der Fotometrie die Küvette um ihre Längsachse dreht, um die Küvette in mehreren rotatorischen Positionen zu fotometrieren. Durch die Ermittlung und Verwendung eines mittleren Formkorrekturwertes F wird die durchschnittliche Genauigkeit der Messergebnisse erhöht.

Gemäß einer bevorzugten Ausgestaltung wird nach dem Messen des Innen- oder Außen-Durchmessers des Küvettenkörpers die Küvette mit einem Reagenz befüllt, das mit dem zu bestimmenden Analyt der Flüssigkeits-Probe farbverändernd reagiert. Anschließend wird die Küvette mit einem Transportverschluss, beispielsweise einen Schraubdeckel, verschlossen. Der Transportverschluss wird erst zum Einfüllen der Probe vom Endbenutzer wieder geöffnet, Gegebenenfalls wird die Küvette nach dem Einfüllen der Wasserprobe mit dem Transportverschluss wieder verschlossen, um die Wasserprobe mit dem Reagenz in der Küvette durch Schütteln vermischen zu können.

Das optische Messen bzw. Erfassen des Durchmessers des Küvettenkörpers erfolgt vorzugsweise durch eine digitale Vermessungskamera. Hiermit kann bei ausreichender Auflösung der Vermessungskamera mit einem einzigen Foto der Innen-und/oder der Außen-Durchmesser bestimmt werden. Hierdurch wird der Küvetten-Produktionsprozess nur geringfügig beeinträchtigt.

Gemäß einer bevorzugten Ausgestaltung des Verfahrens ist vor dem Errechnen des Formkorrekturwertes F vorgesehen, sowohl den Außen- als auch den Innen-Durchmesser des Küvettenkörpers zu vermessen, wobei der Formkorrekturwert F sowohl aus dem gemessenen Innen-Durchmesser als auch aus dem gemessenen Außen-Durchmesser ermittelt wird. Es wird also nicht nur ein einziger Durchmesser-Wert, also der Außen- oder der Innen-Durchmesser ermittelt, sondern sowohl der Außen-Durchmesser- als auch der Innen-Durchmesser-Wert. Auf diese Weise kann auch die Wandstärke des Küvettenkörpers bestimmt werden. Dies ist insbesondere dann von Bedeutung, wenn die Fotometrie im UV-Bereich durchgeführt wird, da die üblicherweise für den Küvettenkörper verwendeten Gläser UV-Strahlung relativ stark absorbieren. Durch Messung sowohl des Außen- als auch des Innen-Durchmessers und der hiermit möglichen Bestimmung der Küvettenkörper-Wandstärke kann auch die möglicherweise über den Umfang sogar schwankende Küvettenkörper-Wandstärke in den Formkorrekturfaktor F einfließen. Auf diese Weise wird die durchschnittliche Genauigkeit der aus den Fotometrie-Messsignalen generierten Messwerte erhöht.

Im Folgenden wird unter Bezugnahme auf die Zeichnungen das erfindungsgemäße Verfahren näher erläutert.

Es zeigen;
- Figur 1: einen Längsschnitt durch eine Küvette,
- Figur 2: eine Anordnung zum Messen des Innen- und/oder Außen-Durchmessers des Küvettenkörpers der Küvette der Figur 1, und
- Figur 3: ein Analysegerät mit einer eingesetzten Küvette.

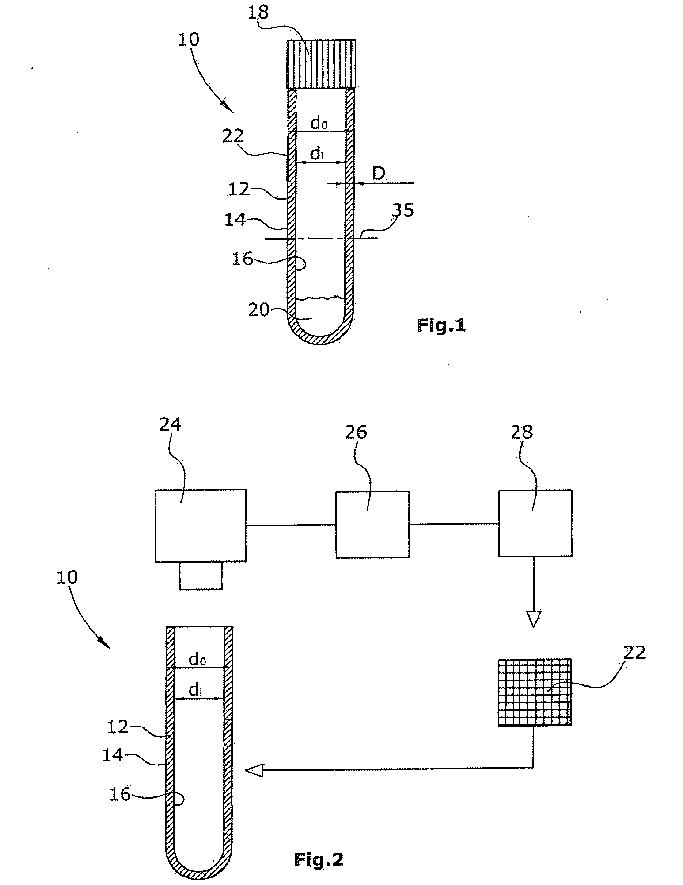

In der Figur 1 ist eine Küvette 10 dargestellt, die ein festes oder flüssiges Reagenz 20 enthält und mit einem Transportverschluss 18 verschlossen ist. Die Küvette 10 wird von einem Küvettenkörper 12 aus Glas gebildet. Das Reagenz 20 kann fest oder flüssig sein. Der Küvettenkörper 12 weist eine Außenseite 14 und eine Innenseite 16 auf und ist im Wesentlichen zylindrisch, also im Querschnitt kreisrund ausgebildet. Der Küvettenkörper 12 weist einen Außendurchmesser dₒ und einen Innendurchmesser d_{I} auf. Auf den Küvettenkörper 12 ist außenseitig ein zweidimensionaler Barcode 22 aufgeklebt.

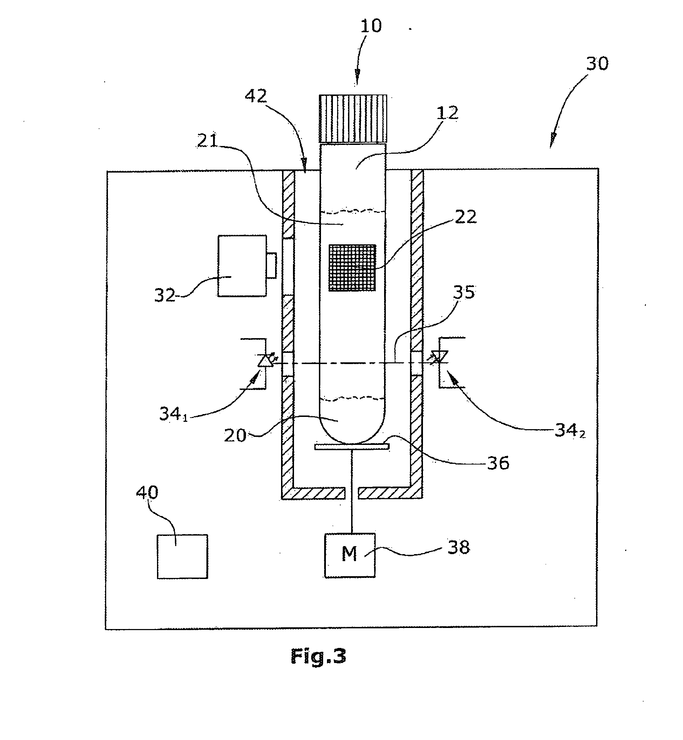

Das erfindungsgemäße Verfahren wird im folgenden anhand der Figuren 2 und 3 beschrieben: Zunächst wird der Küvettenkörper 12 mit Hilfe einer digitalen Vermessungskamera 24 optisch vermessen. Hierzu ist die Vermessungskamera 24 bevorzugt axial ausgerichtet mit der Axialen des Küvettenkörpers 12, so dass die Vermessungskamera 24 axial auf die Öffnung des Küvettenkör1pers 12 gerichtet ist. Die Vermessungskamera 24 macht ein Foto der Öffnungsseite der Küvette 10, welches in einem Vermessungscomputer 26 weiter verarbeitet wird.

Der Vermessungscomputer 26 ermittelt aus dem Foto den Außendurchmesser dₒ und den Innendurchmesser dᵢ an mehreren rotatorischen Positionen des Küvettenkörpers 12, und generiert aus den ermittelten Durchmesser-Werten jeweils einen Durchschnittswert. Aus den auf diese Weise ermittelten zwei Durchschnittswerten wird, abhängig von ihrer Abweichung von einem idealen Sollwert, ein Formkorrekturwert F errechnet, der bei der späteren Ermittlung eines Analyt-Messwertes in einem Labor-Analysegerät 30 berücksichtigt wird. Durch den Formkorrekturwert F wird zum einen der Einfluss der variierenden Länge der radialen Messstrecke 35 innerhalb des Küvettenkörpers 12 und die mit der Wandstärke D variierende Absorption der Strahlung in dem Glas des Küvettenkörpers 12 korrigiert bzw. normiert.

Aus dem Formkorrekturwert F wird in dem Vermessungscomputer 26 zunächst virtuell ein Barcode generiert, der anschließend durch einen Drucker 28 hergestellt wird. Der zweidimensionale Barcode 22 wird auf den Küvettenkörper- 12 außen aufgeklebt. Anschließend wird das Reagenz 20 in die Küvette 10 eingefüllt und wird der Küvettenkörper 12 durch den Transportverschluss 18, beispielsweise einen Schraubdeckel, verschlossen.

Die Küvette 10 wird an den Benutzer verschickt. Der Benutzer entfernt zur quantitativen Bestimmung eines Analyts in einer Flüssigkeits-Probe den Transportverschluss 18, und füllt eine bestimmte Menge der Flüssigkeit, beispielsweise Abwasser, als Probe 21 in die Küvette 10 ein. Anschließend wird die Küvette 10 mit dem Transportverschluss 12 wieder verschlossen, und wird das Reagenz 20 mit der Probe 21 in der Küvette 10 durch Schütteln vermischt.

Anschließend wird die Küvette 10 in einen Küvettenschacht 42 des Analysegerätes 30 eingesetzt, woraufhin der Analyse-Prozess automatisch beginnt. Am Boden des Küvettenschachtes 42 ist ein Drehteller 36 angeordnet, der durch einen elektrischen Antriebsmotor 38 gedreht werden kann. Die Küvette 10 wird zunächst so lange gedreht, bis der als Digitalkamera ausgebildete Barcodeleser 32 des Analysegerätes 30 den Barcode 22 auf der Außenseite 14 des Küvettenkörpers 12 gefunden hat. Anschließend liest der Barcodeleser 32 den Barcode 22 in Form eines Fotos aus, aus dem anschließend in einer Analysegerät-Steuerung 40 unter anderem der Formkorrekturwert F ermittelt wird.

Ferner wird durch ein Fotometer 34, das unter anderem einen Fotometer-Sender 34₁ und einen Fotometer- Empfänger 34₂ aufweist, die Extinktion bestimmt. Dies erfolgt unter Drehung der Küvette 10 an mehreren rotatorischen Positionen, so dass Artefakte ggf. unterdrückt werden können und ein verlässlicher Durchschnttts-Signalwert des Fotometers 34 zur Verfügung steht. In der Analysegerät-Steuerung 40 wird aus dem Signalwert mit Hilfe des Formkorrekturwertes F ein Messwert errechnet und optisch, akustisch und/oder elektronisch ausgegeben.

## Patentansprüche

1. Verfahren zur Ermittlung eines Formkorrekturwertes F für Labor-Flüssigkeitsanalyse- Küvetten (10) mit einem im Querschnitt kreisrunden Küvettenkörper (12) für die fotometrische Flüssigkeitsanalyse, mit den Verfahrensschritten:
optisches Messen des Innen- oder Außen-Durchmessers dᵢ;dₒ des Küvettenkörpers (12),
Errechnen eines Formkorrekturwertes F aus dem gemessenen Küvettenkörper- Durchmesser dᵢ;dₒ, wobei der Formkorrekturwert für ein transmissiv arbeitendes fotometrisches Analysegerät einen Wert zur Verfügung stellt, der mit der exakten radialen Länge der Messstrecke innerhalb der Küvette korreliert und
Hinterlegen des Formkorrekturwertes F für die Länge der photometrischen Messstrecke (35) in der Küvette (10) an dem Küvettenkörper (12).

2. Verfahren zur Ermittlung eines Küvetten- Formkorrekturwertes F nach Anspruch 1, wobei der Formkorrekturwert F in einem zweidimensionalen Barcode (22), der von einem Barcodeleser (32) eines Analysegerätes (30) eingelesen werden kann, auf der Außenseite (14) des Küvettenkörpers (12) hinterlegt wird.

3. Verfahren zur Ermittlung eines Küvetten- Formkorrekturwertes F nach einem der vorangegangenen Ansprüche, wobei der Durchmesser dᵢ;dₒ des Küvettenkörpers (12) über den gesamten Küvettenkörper- Umfang mehrfach gemessen wird und der Formkorrekturwert F aus allen Durchmesser-Werten dᵢ;dₒ ermittelt wird.

4. Verfahren zur Ermittlung eines Küvetten- Formkorrekturwertes F nach einem der vorangegangenen Ansprüche, mit den folgenden Verfahrensschritten nach dem Messen:
Befüllen der Küvette (10) mit einem Reagenz (20), das mit dem zu bestimmenden Analyt der Flüssigkeit farbverändernd reagiert, und
Verschließen der Küvette (10) mit einem Transportverschluss (18).

5. Verfahren zur Ermittlung eines Küvetten- Formkorrekturwertes F, wobei das optische Messen durch eine digitale Kamera (24) erfolgt.

6. Verfahren zur Ermittlung eines Küvetten- Formkorrekturwertes F nach einem der vorangegangenen Ansprüche, mit den folgenden Verfahrensschritten vor dem Errechnen des Formkorrekturwertes F:
Optisches Messen des Außen- und des Innen- Durchmessers dₒ;dᵢ des Küvettenkörpers (12), wobei der Formkorrekturwert F sowohl aus dem gemessenen Innen- Durchmesser dᵢ als auch dem gemessenen Außen-Durchmesser dₒ ermittelt wird.

## Claims

1. A method for determining a shape correction value F for laboratory liquid-analysis cuvettes (10) having a cuvette body (12) with a circular cross-section for photometric liquid analysis, comprising the following steps:
optically measuring the inside or outside diameter dᵢ;dₒ of the cuvette body (12),
calculating a shape correction value F from the measured cuvette body diameter dᵢ;dₒ, wherein the shape correction value provides a transmissively operating analyzer with a value that correlates with the exact radial length of the measuring length within the cuvette, and
storing the shape correction value F for the length of the photometric measuring length (35) in the cuvette (10) on the cuvette body (12).

2. The method for determining a shape correction value F of claim 1, wherein the shape correction value F is stored on the outer side (14) of the cuvette body (12) in a two-dimensional barcode (22) that can be read by a barcode reader (32) of an analyzer (30).

3. The method for determining a shape correction value F of one of the preceding claims, wherein the diameter dᵢ;dₒ of the cuvette body (12) is measured several times along the entire cuvette body circumference and the shape correction value F is determined from all diameter values dᵢ;dₒ.

4. The method for determining a shape correction value F of one of the preceding claims, wherein the method comprises the following steps after measuring:
filling the cuvette (10) with a reagent (20) that reacts in a color-changing manner with the analyte in the liquid to be determined, and
closing the cuvette (10) with a transport closure (18).

5. The method for determining a shape correction value F of one of the preceding claims, wherein the optical measuring is performed by means of a digital camera (24).

6. The method for determining a shape correction value F of one of the preceding claims, wherein the method comprises the following steps prior to the calculation of the shape correction value F:
optical measuring of the outer and inner diameters dₒ; dᵢ of the cuvette body (12), wherein the shape correction value F is determined both from the measured inner diameter dᵢ and from the measured outer diameter dₒ.

## Revendications

1. Procédé de détermination d'une valeur de correction de forme F pour éprouvettes (10) d'analyse de liquide en laboratoire avec un corps d'éprouvette (12) à section circulaire pour l'analyse photométrique de liquide, le procédé comprenant les étapes suivantes:
mesurer optiquement le diamètre intérieur ou extérieur dᵢ;dₒ du corps de cuvette (12),
calculer une valeur de correction de forme F à partir du diamètre intérieur ou extérieur dᵢ;dₒ du corps de cuvette mesuré, ladite valeur de correction de forme F fournissant à un appareil d'analyse photométrique à transmission une valeur se corrélant à la longueur radiale exacte de la distance de mesure dans l'éprouvette, et
déposer ladite valeur de correction de forme F pour la longueur de la distance de mesure photométrique (35) dans l'éprouvette (10) sur le corps d'éprouvette (12).

2. Procédé de détermination d'une valeur de correction de forme F pour éprouvettes selon la revendication 1, dans lequel la valeur de correction de forme F est déposée sur l'extérieur (14) du corps de cuvette (12) dans un code à barres (22) bidimensionnel qui peut être lue par un lecteur de code à barres (32) d'un appareil d'analyse (30).

3. Procédé de détermination d'une valeur de correction de forme F pour éprouvettes selon l'une quelconque des revendications précédentes, dans lequel diamètre dᵢ;dₒ du corps de cuvette (12) est mesuré plusieurs fois sur toute la circonférence du corps de cuvette et la valeur de correction de forme F est déterminée à partir de toutes les valeurs de diamètre dᵢ;dₒ.

4. Procédé de détermination d'une valeur de correction de forme F pour éprouvettes selon l'une quelconque des revendications précédentes, comprenant les étapes suivantes après la mesure:
remplir l'éprouvette (10) avec un réactif (20) réagissant, en changeant la couleur, avec l'analyte du liquide à déterminer, et
fermer l'éprouvette (10) avec une fermeture de transport (18).

5. Procédé de détermination d'une valeur de correction de forme F pour éprouvettes, selon lequel la mesure optique est effectuée par une caméra numérique (24).

6. Procédé de détermination d'une valeur de correction de forme F pour éprouvettes selon l'une quelconque des revendications précédentes, comprenant les étapes suivantes avant le calcul de la valeur de correction de forme F:
mesurer optiquement le diamètre intérieur et extérieur dᵢ;dₒ du corps de cuvette (12), ladite valeur de correction de forme F étant déterminée à partir du diamètre intérieur dᵢ mesuré et à partir du diamètre extérieur dₒ mesuré.
